# EUROPEAN PATENT SPECIFICATION

(11) **EP 3 216 573 B1**
(45) Date of publication and mention of the grant of the patent: **09.12.2020**
(21) Application number: 17159928.5
(22) Date of filing: 08.03.2017
(51) Int. Cl.: B27B 19/00

(54) **POWER TOOL WITH TOOLLESS BLADE RELEASE MECHANISM**
ELEKTROWERKZEUG MIT WERKZEUGLOSEM LÖSEMECHANISMUS
OUTIL ÉLECTRIQUE AVEC MÉCANISME DE LIBÉRATION DE LAME SANS OUTIL

(30) Priority: 09.03.2016 US 201615065024
(43) Date of publication of application: 13.09.2017
(73) Proprietor: TTI (Macao Commercial Offshore) Limited, Macao (MO)
(72) Inventor: Scott, Zachary, Pendleton, SC South Carolina 29670 (US); Gregorich, Brent, Anderson, SC South Carolina 29625 (US); McCracken, Robert E., Anderson, SC South Carolina 29625 (US); Mok, Kwok Ting, Tokwawan (HK); Wong, Tsz Kin, Shatin (HK)
(74) Representative: Dauncey, Mark Peter

(56) References cited:
- WO-A1-2007/012882
- DE-A1-102011 005 021
- US-A1- 2014 327 215
- US-B2- 7 013 987

## Description

### BACKGROUND

The present disclosure relates to a mechanism for securing a blade to an oscillating power tool.

Oscillating tools can be utilized with various accessories, such as blades and sanding or grinding pad attachments, for performing different functions. For example, a plunge cut blade can be attached to the output of the oscillating tool to perform a plunge cut. Then, a user can remove the plunge cut blade and attach a sanding pad to the output for performing a sanding operation. Conventionally, the blades and sanding/grinding pads can be interchanged by inserting and removing a fastener, such as a screw, which secures the blade or sanding/grinding pad to the oscillating tool output.

According to its abstract, US-A-2014/0327215 describes a power tool having a housing, a motor, a tool holder driven about an output axis by the motor, and an output element for performing an operation on a workpiece. The tool holder has a locating feature including a tapered portion becoming narrower in a direction away from the surface of the tool holder. The output element has an aperture for receiving the locating feature and a face facing the surface of the tool holder when the locating feature is received. The power tool also includes a flange for transferring a clamping force for urging the output element towards the tool holder and a tab projecting from the flange for finger tightening the flange. A biasing member provides the clamping force toollessly. A gap is defined between the surface of the tool holder and the face when the tapered portion of the locating feature is fully received in the aperture. Other examples are known from DE102011005021A1 or US7013987B2.

### SUMMARY OF THE INVENTION

In one aspect, the invention provides an oscillating power tool having a motor, a base flange driven about an output axis by the motor, an accessory shaft movable relative to the base flange between a clamping position and a release position, and a clamping flange pivotably coupled to the accessory shaft for clamping an accessory in cooperation with the base flange.

The clamping flange may be pivotable about a pivot axis, wherein the pivot axis intersects the accessory shaft. The oscillating power tool may further comprise a pivot pin pivotably coupling the clamping flange to the accessory shaft. The flange may be pivotable between a first position in which the flange is transverse to the accessory shaft and a second position in which the flange is generally in line with the accessory shaft. The clamping flange may include a recess for accommodating the accessory shaft in the second position. The accessory shaft may include a reduced diameter portion. The clamping flange may be coupled to the reduced diameter portion. The clamping flange may include a recess for accommodating the reduced diameter portion. The accessory shaft may define a longitudinal axis and may be movable along the longitudinal axis. The clamping flange may be pivotable about an axis that intersects the longitudinal axis. The clamping flange may be substantially parallel to the base flange in the clamping position. The clamping flange may be biased towards the base flange. The oscillating power tool may further comprise an actuator operatively coupled to the accessory shaft in an operative position for moving the accessory shaft. The actuator may include a lever movable between the operative position and a storage position in which the lever is not operatively coupled to the accessory shaft. The clamping flange may be disposed proximate a distal end of the accessory shaft.

In another aspect, the invention provides an oscillating power tool having a motor, a base flange for holding an accessory, and a clamping flange. The base flange is driven about an output axis by the motor. The clamping flange is pivotably mounted between a first position in which the clamping flange is disposed substantially parallel to the base flange for clamping the accessory in cooperation with the base flange and a second position in which the clamping flange is disposed generally perpendicular to the base flange for removing the accessory.

The clamping flange may be pivotable about an axis that intersects the output axis. The clamping flange may include a recess for accommodating the accessory shaft in the second position. The oscillating power tool may further comprise an accessory shaft slidable along the output axis between a clamping position and a release position. The clamping flange may be coupled to the accessory shaft.

In yet another aspect, the invention provides an oscillating power tool having a motor, a base flange for holding an accessory, and a clamping flange. The base flange is driven about an output axis by the motor. The clamping flange is mounted about a pivot axis and pivotable between a first position cooperating with the base flange to clamp the accessory and a second position for removing the accessory. The clamping flange intersects the output axis.

The pivot axis may intersect the output axis. The base flange may be generally planar and may define a tool side generally facing an interior of the power tool and an opposite accessory side receiving the accessory. The pivot axis may be disposed on the accessory side. The clamping flange may be disposed substantially entirely on the accessory side.

Other aspects of the invention will become apparent by consideration of the detailed description and accompanying drawings.

### BRIEF DESCRIPTION OF THE DRAWINGS

FIG. 1 is a side view of an oscillating tool having an accessory clamp according to one construction of the invention.
FIG. 2 is a cross section of a portion of the oscillating tool of FIG. 1 in an accessory clamping position.
FIG. 3 is a cross section of the portion of the oscillating tool of FIG. 1 in an accessory release position.
FIG. 4 is a perspective view of the oscillating tool of FIG. 1 having a lever of an actuator in an extended position.
FIG. 5 is a perspective view of a portion of the oscillating tool of FIG.1 having a portion of the housing removed, the accessory clamp being in the empty clamping position.
FIGS. 6-7 are perspective views of a portion of the oscillating tool of FIG. 1 showing an accessory being removed.

Before any constructions of the invention are explained in detail, it is to be understood that the invention is not limited in its application to the details of construction and the arrangement of components set forth in the following description or illustrated in the following drawings. The invention is capable of other embodiments, constructions and of being practiced or of being carried out in various ways.

### DETAILED DESCRIPTION

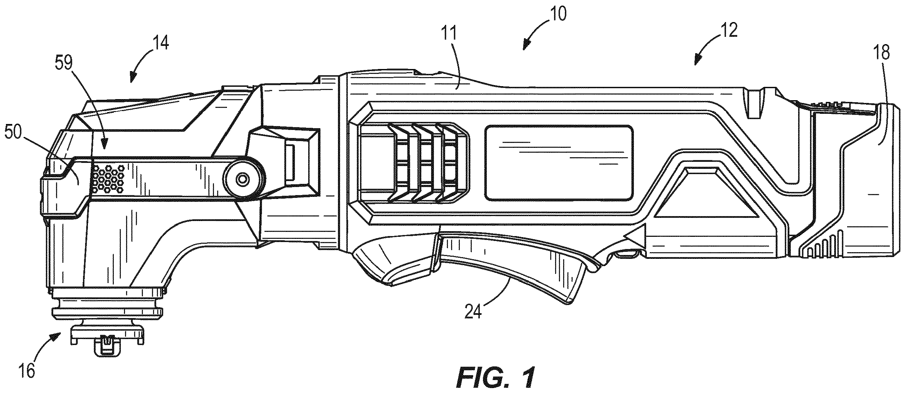

FIG. 1 illustrates an oscillating tool 10 including a handle 12 and a head 14. In the illustrated construction, the head 14 is removably attached to the handle 12. The head 14 can be removed from the handle 12 and replaced by different heads having different functions, such as a drill, an impact driver, a ratchet wrench, etc. For example, the head 14 may be used in conjunction with the tool system described in U.S. Patent Application No. 12/971,049 filed on December 17, 2010. In other constructions, the head 14 may be fixed, or unitary, and non-removable with respect to the handle 12.

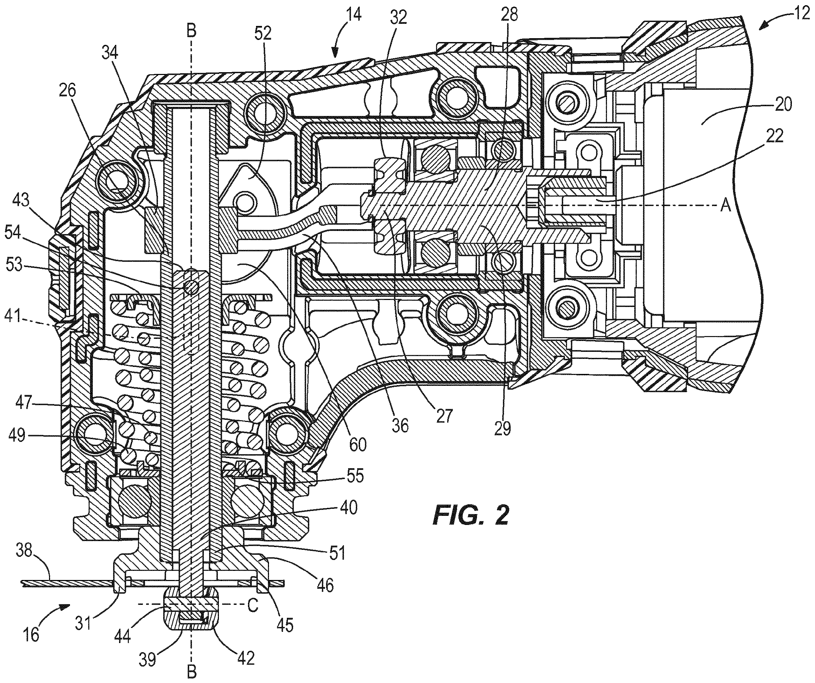

The oscillating tool 10 includes an accessory clamp 16, to which an accessory 38, such as a blade, a sanding pad, a grinding pad, etc., is attachable. The oscillating tool 10 includes a power source, such as a removable and rechargeable battery pack 18, a housing 11 generally housing a motor 20 (FIG. 2) and a drive shaft 22 extending from the motor 20 and defining a longitudinal drive axis A (FIG. 2). In the illustrated construction, the battery pack 18 is a 12-volt battery pack and includes three (3) Lithium-ion battery cells, and the motor 20 is 12V-DC, 2.0 Amps no load current. In other constructions, the battery pack may include fewer or more battery cells such that the battery pack is a 14.4-volt battery pack, an 18-volt battery pack, or the like. Additionally or alternatively, the battery cells may have chemistries other than Lithium-ion such as, for example, Nickel Cadmium, Nickel Metal-Hydride, or the like. In yet other constructions, the oscillating tool 10 may be powered by an AC power source by way of a cord. In yet other constructions, the oscillating tool 10 may be a pneumatic tool powered by compressed air passing through a pneumatic motor. In yet other constructions, a variable speed or multi-speed motor may be employed. In other constructions, other suitable motors and power sources may be employed.

The oscillating tool 10 also includes a trigger 24 biased to a non-depressed position and depressible to activate the motor 20 when in a depressed position. The trigger 24, when depressed, electrically couples the battery pack 18 and the motor 20 to run the motor 20.

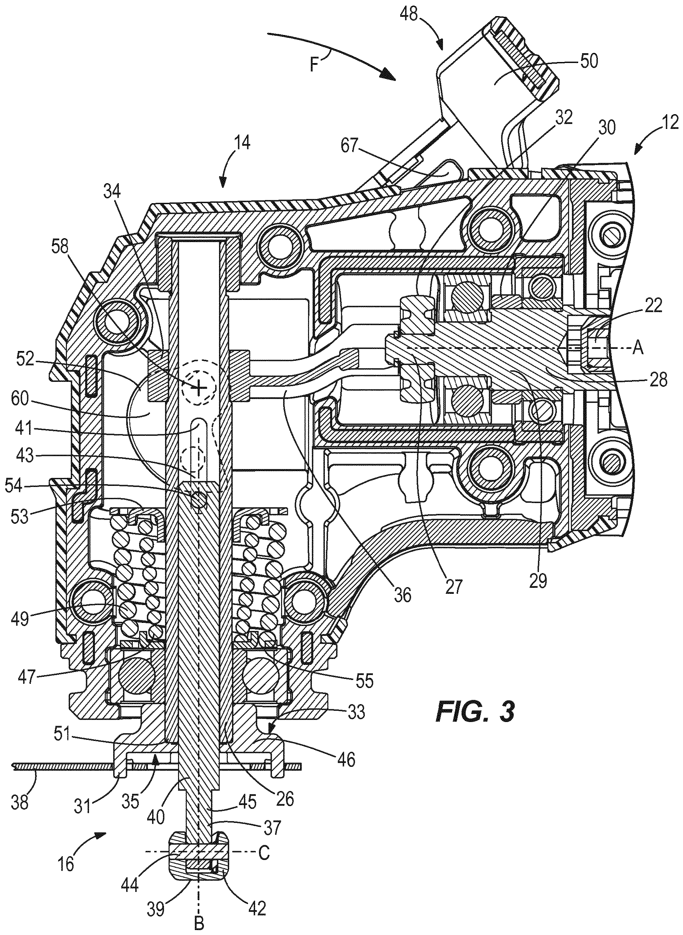

FIGS. 2 and 3 illustrate a cross section of the head 14 according to one construction of the invention. The head 14 converts rotary motion of the motor drive shaft 22 into oscillating motion of a hollow tool shaft 26. The tool shaft 26 defines a longitudinal driven axis B (or output axis) perpendicular to the drive axis A. The motor drive shaft 22 is coupled to an eccentric shaft 28 housed in the head 14 for rotation therewith.

The eccentric shaft 28 includes an eccentric portion 27 that is not centered about the axis A. A ball bearing eccentric member 32 is press fit on the eccentric portion 27 of the eccentric shaft 28. A forked member 34 is coupled to the oscillating tool shaft 26 by a sleeve and includes two prongs 36. The prongs 36 are positioned adjacent opposite sides of the ball bearing eccentric member 32 and transfer eccentric rotary motion of the ball bearing eccentric member 32 into oscillating motion of the oscillating tool shaft 26 about the axis B. In other constructions, other suitable mechanisms for converting rotational motion of the drive shaft 22 into oscillating motion of the tool shaft 26 may be employed.

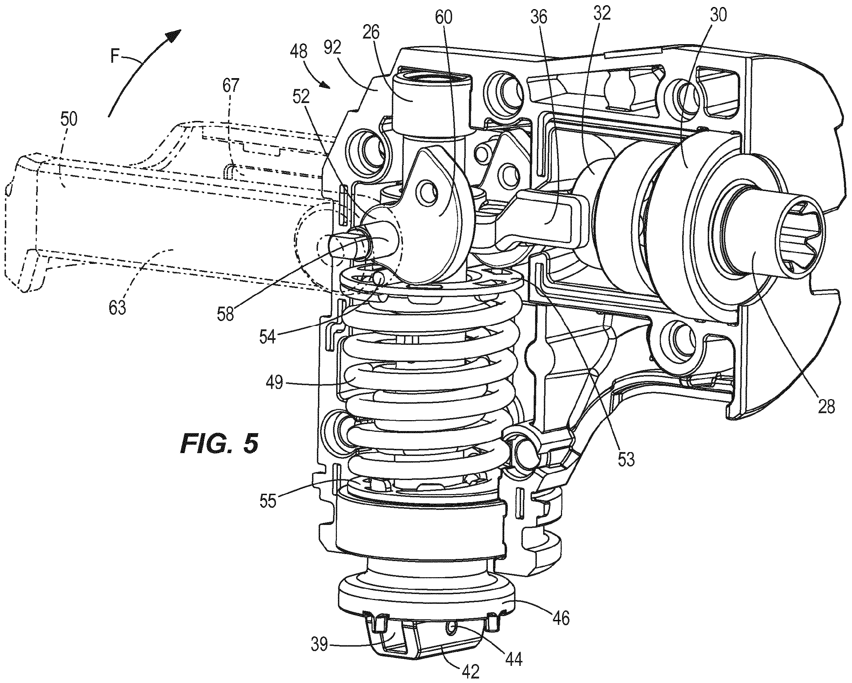

FIGS. 2-3 illustrate the accessory clamp 16 for securing the accessory 38, such as a blade, to the oscillating tool 10. The accessory clamp 16 includes the tool shaft 26, an accessory shaft 40, a clamping flange 42, a base flange 46, and biasing members 47, 49. The tool shaft 26 is hollow and includes a slot 41. The accessory shaft 40 is slidably received in the hollow tool shaft 26. The accessory shaft 40 has an internal end 43 that remains inside the oscillating tool 10 and an external end 45 that may extend outside the oscillating tool 10, e.g., past the base flange 46. A pin 54 is coupled to the accessory shaft 40 adjacent the internal end 43 and a pin 44 is coupled to the accessory shaft 40 adjacent the external end 45. The pin 54 is generally perpendicular to the accessory shaft 40 and is disposed in the slot 41 in the tool shaft 26. The pin 44 is disposed generally perpendicular to the accessory shaft 40 and generally perpendicular to the pin 54. The external end 45 of the accessory shaft 40 has a reduced width portion 37. The accessory shaft 40 is movable along the axis B within the tool shaft 26 between an empty clamping position (FIG. 5), an accessory clamping position (FIG. 2), and an accessory release position (FIG. 3).

In the empty clamping position (which may also be referred to as the accessory clamping position, though no accessory is present), no accessory is clamped and the clamping flange 42 is fully biased toward the base flange 46. In the empty clamping position, the clamping flange 42 may engage and/or be disposed directly adjacent to the base flange 46. In the empty clamping position, the pin 54 is at an upper end (e.g., an end farther away from the accessory clamp 16 along the axis B than a lower end) of the slot 41.

In the accessory clamping position (FIG. 2), the clamping flange 42 is fully biased toward the base flange 46. In the accessory clamping position, the accessory 38 is clamped between the clamping flange 42 and the base flange 46 and the pin 54 is proximate, but spaced apart from, the upper end of the slot 41 to accommodate a thickness of the accessory 38.

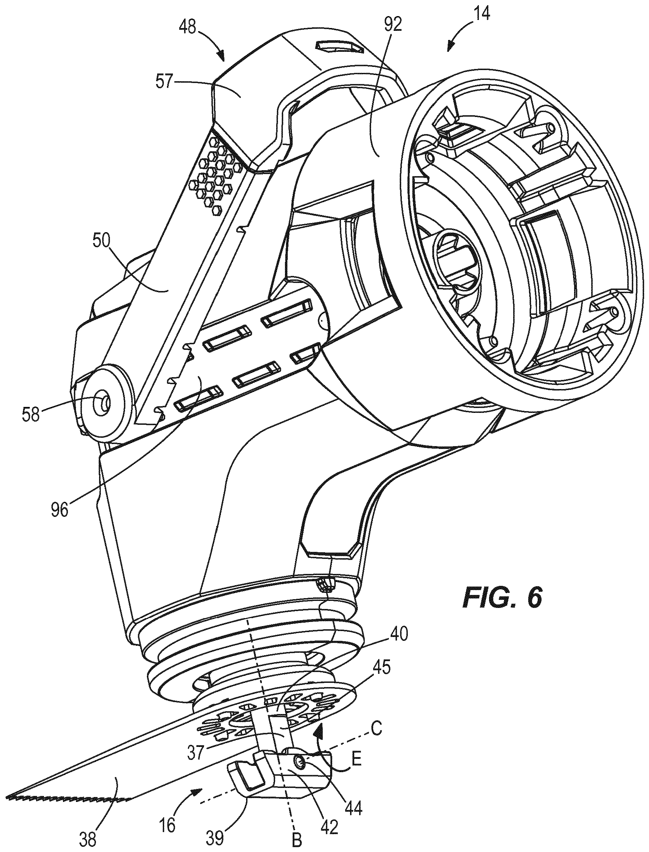

In the accessory release position (FIG. 3), the accessory 38 is removable and the clamping flange 42 is spaced from the base flange 46 a distance at least equal to half a length of the clamping flange 42 to provide adequate space for the clamping flange 42 to pivot, as will be described in greater detail below. In the accessory release position, the pin 54 is adjacent the lower end (e.g., an end closer to the accessory clamp 16 than the upper end) of the slot 41. The clamping flange 42 is pivotably coupled to the external end 45 of the accessory shaft 40 by the pin 44. The clamping flange 42 is biased towards the base flange 46 disposed at an external end 51 (FIG. 3) of the tool shaft 26 and sandwiches the accessory 38 (when present) therebetween. The clamping flange 42 includes a recess 39 (FIG. 6) that receives the reduced diameter portion 37 at the external end 45 of the accessory shaft 40 when the clamping flange 42 is pivoted to be in line with the accessory shaft 40.

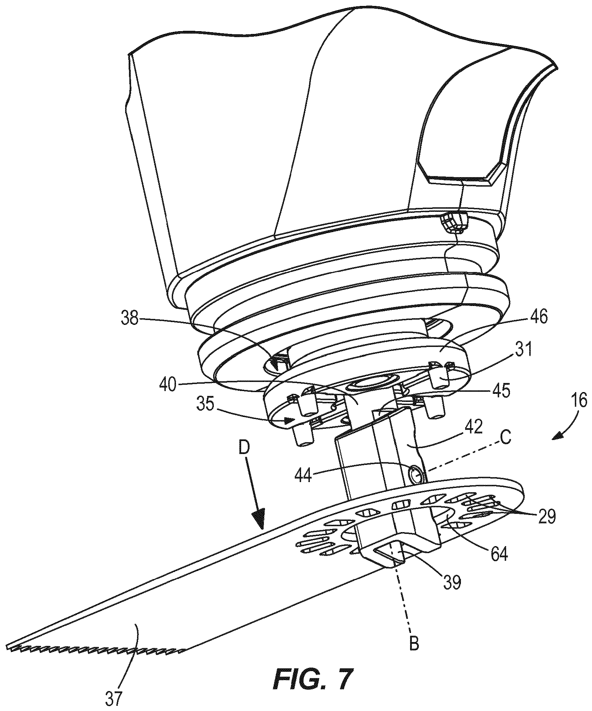

With reference to FIG. 7, the base flange 46 may include locating features 31, such as lugs extending generally axially away from the base flange 46 with respect to the axis B. The locating features 31 mate with corresponding features 29 of the accessory 38, such as apertures receiving the lugs, to provide driving engagement with the accessory 38 that transfers output motion of the base flange 46 to the accessory 38. The base flange 46 is generally planar and disposed generally normal to the axis B. The base flange 46 includes a tool side 33 generally facing the interior of the oscillating tool 10 and an opposite accessory side 35 generally facing the clamping flange 42 and receiving the accessory 38.

Referring back to FIGS. 2 and 3, a generally planar biasing flange 53 and a generally planar spring base flange 55 are disposed generally perpendicular to the axis B and generally parallel to each other. Biasing members, such as springs 47, 49 are positioned between the biasing flange 53 and the spring base flange 55 for biasing the biasing flange 53 towards the clamping position, thereby biasing the clamping flange 42 towards the clamping position. The pin 54 engages the biasing flange for exerting a force against the springs 47, 49. Springs 47, 49 provide the clamping force necessary to hold the accessory 38 (when present) between the clamping flange 42 and the base flange 46 by biasing the clamping flange 42 towards the base flange 46.

FIG. 2 shows the accessory clamp 16 in the accessory clamping position. The clamping flange 42 is perpendicular to the axis B and is flush against the accessory 38, such that clamping flange 42 is inhibited from pivoting around the pin 44. The force of the springs 47, 49 clamps the accessory 38 between the clamping flange 42 and the base flange 46.

FIGS. 3, 6, and 7 show the accessory clamp 16 in the accessory release position. The accessory shaft is in an extended position so that the pin 54 is near the lower end of the slot 41. In this position, the clamping flange 42 is spaced from the base flange 46 so that the clamping flange can pivot about the pin 44 from a position perpendicular to the axis B (shown in FIGS. 3 and 6) to a position parallel to the axis B (shown in FIG. 7). With reference to FIGS. 6 and 7, when the clamping flange 42 is in the extended position, the clamping flange 42 is pivotable about the pin 44 about an axis C in the direction shown by an arrow E between a position in which the clamping flange 42 is generally perpendicular to the accessory shaft 40 and generally parallel with the base flange 46 and a position in which the clamping flange 42 is generally in line, or generally parallel, with the accessory shaft 40 and generally perpendicular to the base flange 46. The axis C is generally perpendicular to the axis B and intersects the axis B. The recess 39 of the clamping flange 42 is shaped and sized to accommodate the reduced diameter portion 37 at the external end 45 of the accessory shaft 40 when the clamping flange 42 is in line with the accessory shaft 40. The pin 44 and the pivot axis C are disposed on the accessory side 33 of the base flange 46.

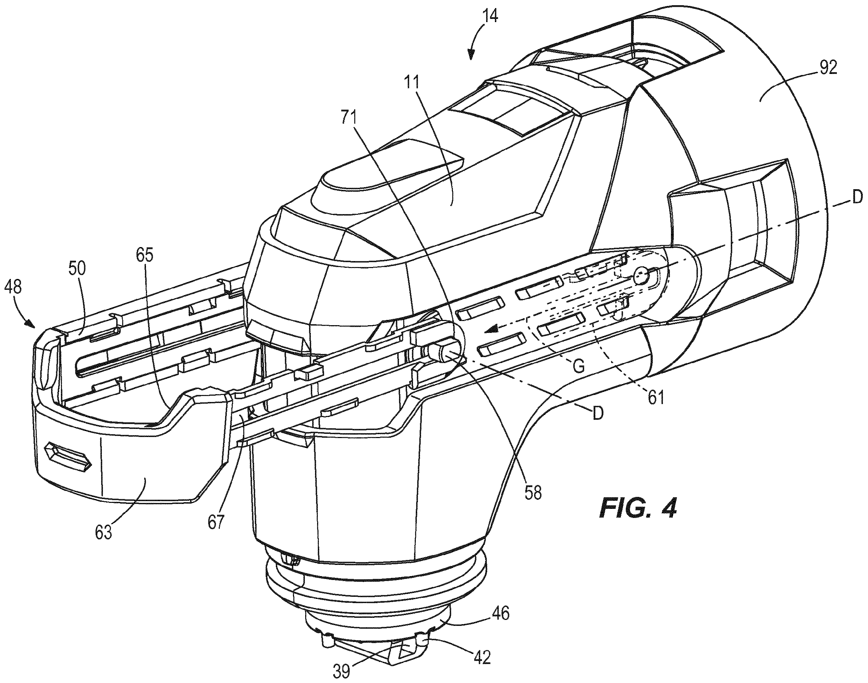

FIGS. 4-5 illustrate one construction of an actuator 48 operatively coupled to the accessory shaft 40 for moving the accessory shaft 40 axially between the accessory release position and the accessory clamping position. In the illustrated construction, the actuator 48 includes a lever 50 and cams 52. In other constructions, other suitable actuators may be employed to move the accessory shaft 40. As shown in FIG. 4, the lever 50 includes lever tracks 67 that slidably engage with cam pins 58 coupled to the cams 52. The lever 50 is generally U-shaped and is movable along housing tracks 61 recessed in the housing 11 between a storage position 59 (FIG. 1) and an operative position 63 (FIG. 4). In the operative position, the lever 50 is rotatable with the cam pins 58 in the direction shown by the arrow F to a release position 57 (FIG. 6). In the storage position 59, the lever 50 is generally flush with the housing 11. In the operative position 63, the lever 50 is extended, thus spaced from the housing 62 so that a gap 65 is defined between the lever 50 and the housing 62. When the lever 50 is in the operative position 63, an end 71 of the lever is operatively engaged with the cam pins 58. The cam pins 58 extend longitudinally along an axis D that is generally perpendicular to the axis defined by the lever tracks 67 and are mounted for rotation with the cams 52 about the axis D. In the operative position 63, the lever 50 is pivotable with the cam pins 58 in the direction shown by arrow F (FIG. 3).

FIG. 5 is a cutaway view of the head 14 in the position shown in FIG. 4. The cams 52 are coupled to the cam pins 58 for rotation with the cam pins 58 and include an eccentric portion 60. The eccentric portion 60 of the cams 52 abut the pin 54, which is attached proximate the top end 43 of the accessory shaft 40. The cams 52 are rotatable between the clamping position (FIG. 2) and the release position (FIG. 3).

In operation, to remove the accessory 38 from the oscillating tool 10, the user slides the lever 50 away from the head 14 in the direction of the arrow G (FIG. 4) from the storage position to the operative position. After sliding the lever 50 until the ends 57 of the tracks 60 contact the cam pins 58, the lever 50 is rotated in the direction indicated by the arrow F (FIG. 5). Upon movement of the lever 50 in the direction shown by the arrow F, the cam pins 58 rotate the cams 52, and the cams 52 slide over the pin 54, which follow the cams 52. As the eccentric portions 60 of the cams come into contact with the pin 54, the pin 54 is pushed downward against the bias of the springs 47, 49 toward the lower end of the slot 41, as shown in FIG. 3. The clamping flange 42 will slide apart from the base flange 46 as the lever 50 pivots. With continued reference to FIG. 3, when the pin 54 is proximate the lower end of the slot 41, the accessory shaft 40 is positioned in the accessory release position. The clamping flange 42 is spaced from the base flange 46 along the axis B so that the clamping flange 42 is rotatable around the pin 44. When the clamping flange 42 is in its extended accessory release position, the clamping flange 42 is rotated about the pin 44 in the direction shown by the arrow E (FIG. 6) so that the clamping flange 42 is substantially parallel to the axis B and in line with the accessory shaft 40 (FIG. 7). In this position, the accessory 38 can slide over the clamping shaft 42. Specifically, an aperture 64 in the accessory 38 passes over the clamping shaft 42.

To install the accessory 38, the user passes the aperture 64 in the accessory 38 over the clamping flange 42. The user then then pivots the clamping flange 42 about the pin 44 in a direction opposite the direction shown by the arrow E (FIG. 6) so that it is substantially perpendicular to the axis B and substantially parallel to the base flange 46. The lever 50 is then rotated in a direction opposite the direction shown by the arrow F (FIG. 5) until the lever tracks 67 in the lever 50 are aligned with the housing tracks 61 in the housing 11 of the head 14. As the lever 50 moves in the direction opposite the arrow F, the cam pins 58 rotate the eccentric portion 60 of the cams 52 away from the accessory clamp 16 such that the pin 54 is pushed upward by the springs 47, 49. The pin 54 moves to the upper end of the slot 41, as shown in FIG. 2. When the pin 54 is at or near the top of the slot 41, the accessory shaft 40 is positioned in the accessory clamping position, with the accessory 38 held between the clamping flange 42 and the base flange 46.

In other constructions, other suitable actuation mechanisms may be employed in order to move the accessory shaft 40 axially between the accessory release position and the accessory clamping position.

Thus, the invention provides, among other things, a tool-free attachment mechanism for securing and releasing an accessory with respect to an oscillating tool. The tool-free attachment mechanism remains attached to the oscillating tool while securing and while releasing the accessory. Various features and advantages of the invention are set forth in the following claims.

## Claims

1. An oscillating power tool (10) comprising:
a motor (20);
a base flange (46) driven about an output axis (B) by the motor;
an accessory shaft (40) movable relative to the base flange between a clamping position and a release position;
a clamping flange (42) pivotably coupled to the accessory shaft, the clamping flange cooperating with the base flange for clamping an accessory (38); **characterized by**
an actuator (48) operatively coupled to the accessory shaft (40) in an operative position for moving the accessory shaft, wherein the actuator includes a lever (50) movable between the operative position and a storage position in which the lever is not operatively coupled to the accessory shaft.

2. The oscillating power tool (10) of claim 1, wherein the clamping flange (42) is pivotable about a pivot axis (C), wherein the pivot axis intersects the accessory shaft (40).

3. The oscillating power tool (10) of claim 1, further comprising a pivot pin (44) pivotably coupling the clamping flange (42) to the accessory shaft (40).

4. The oscillating power tool (10) of claim 1, wherein the clamping flange (42) is pivotable between a first position in which the clamping flange is transverse to the accessory shaft (40) and a second position in which the clamping flange is generally in line with the accessory shaft, and optionally wherein the clamping flange includes a recess (39) for accommodating the accessory shaft in the second position.

5. The oscillating power tool (10) of claim 1, wherein the accessory shaft (40) includes a reduced diameter portion (37), and wherein the clamping flange (42) is coupled to the reduced diameter portion, and optionally wherein the clamping flange includes a recess (39) for accommodating the reduced diameter portion.

6. The oscillating power tool (10) of claim 1, wherein the accessory shaft (40) defines a longitudinal axis (B) and is movable along the longitudinal axis, and wherein the clamping flange (42) is pivotable about an axis (C) that intersects the longitudinal axis.

7. The oscillating power tool (10) of claim 1, wherein the clamping flange (42) is substantially parallel to the base flange (46) in the clamping position.

8. The oscillating power tool (10) of claim 1, wherein the clamping flange (42) is biased towards the base flange (46).

9. The oscillating power tool (10) of claim 1, wherein the clamping flange (42) is disposed proximate a distal end of the accessory shaft (40).

10. The oscillating power tool (10) of claim 1, wherein the lever (50) is slidable into and out of the storage position.

11. The oscillating power tool (10) of claim 1, further comprising at least one cam pin (58) coupled to the accessory shaft (40), wherein the lever (50) further includes at least one lever track (67) having an elongated aperture (64) therethrough, wherein the lever track slidable engages the at least one cam pin;
OR
wherein the lever is pivotable in the operative position and not pivotable in the storage position.

12. The oscillating power tool (10) of claim 1, wherein the lever (50) is movable in the operative position between an accessory clamping position for securing the accessory (38) and an accessory release position for releasing the accessory;
preferably, the lever is movable from the accessory release position to the accessory clamping position to the storage position.

13. The oscillating power tool (10) of claim 1, further comprising at least one cam pin (58) coupled to the accessory shaft (40), wherein in the operative position the lever engages the at least one cam pin to move the accessory shaft to the release position.

14. The oscillating power tool (10) of claim 1, further comprising a housing (11), wherein the lever (50) is movably coupled to the housing, and wherein the lever is flush with the housing in the storage position and projection from the housing in the operative position.

15. The oscillating power tool (10) of claim 1, wherein movement of the lever (50) to the storage position decouples the lever from the accessory shaft (40).

## Patentansprüche

1. Oszillierendes Elektrowerkzeug (10), umfassend:
einen Motor (20);
einen Basisflansch (46), welcher um eine Ausgangsachse (B) durch den Motor angetrieben wird;
eine Zubehörwelle (40), welche relativ zu dem Basisflansch zwischen einer Klemmposition und einer Freigabeposition beweglich ist;
einen Klemmflansch (42), welcher schwenkbar mit der Zubehörwelle gekoppelt ist, wobei der Klemmflansch mit dem Basisflansch zum Klemmen eines Zubehörs (38) zusammenwirkt; **gekennzeichnet durch**
einen Aktuator (48), welcher wirksam mit der Zubehörwelle (40) in einer Betriebsposition gekoppelt ist, um die Zubehörwelle zu bewegen, wobei der Aktuator einen Hebel (50) umfasst, welcher zwischen der Betriebsposition und einer Lagerposition bewegbar ist, in welcher der Hebel mit der Zubehörwelle nicht wirksam gekoppelt ist.

2. Oszillierendes Elektrowerkzeug (10) nach Anspruch 1, wobei der Klemmflansch (42) um eine Schwenkachse (C) schwenkbar ist, wobei die Schwenkachse die Zubehörwelle (40) schneidet.

3. Oszillierendes Elektrowerkzeug (10) nach Anspruch 1, ferner umfassend einen Schwenkstift (44), welcher den Klemmflansch (42) mit der Zubehörwelle (40) schwenkbar koppelt.

4. Oszillierendes Elektrowerkzeug (10) nach Anspruch 1, wobei der Klemmflansch (42) zwischen einer ersten Position, in welcher der Klemmflansch zu der Zubehörwelle (40) quergestellt ist, und einer zweiten Position schwenkbar ist, in welcher der Klemmflansch im Wesentlichen mit der Zubehörwelle ausgerichtet ist, und optional wobei der Klemmflansch eine Ausnehmung (39) zum Aufnehmen der Zubehörwelle in der zweiten Position umfasst.

5. Oszillierendes Elektrowerkzeug (10) nach Anspruch 1, wobei die Zubehörwelle (40) einen Abschnitt (37) mit einem reduzierten Durchmesser umfasst und wobei der Klemmflansch (42) mit dem Abschnitt mit dem reduzierten Durchmesser gekoppelt ist, und optional wobei der Klemmflansch eine Ausnehmung (39) zum Aufnehmen des Abschnitts mit dem reduzierten Durchmesser umfasst.

6. Oszillierendes Elektrowerkzeug (10) nach Anspruch 1, wobei die Zubehörwelle (40) eine Längsachse (B) definiert und entlang der Längsachse bewegbar ist und wobei der Klemmflansch (42) um eine Achse (C) schwenkbar ist, welche die Längsachse schneidet.

7. Oszillierendes Elektrowerkzeug (10) nach Anspruch 1, wobei der Klemmflansch (42) im Wesentlichen parallel zu dem Basisflansch (46) in der Klemmposition verläuft.

8. Oszillierendes Elektrowerkzeug (10) nach Anspruch 1, wobei der Klemmflansch (42) zu dem Basisflansch (46) hin vorgespannt ist.

9. Oszillierendes Elektrowerkzeug (10) nach Anspruch 1, wobei der Klemmflansch (42) in der Nähe eines distalen Endes der Zubehörwelle (40) angeordnet ist.

10. Oszillierendes Elektrowerkzeug (10) nach Anspruch 1, wobei der Hebel (50) in und aus der Lagerposition verschiebbar ist.

11. Oszillierendes Elektrowerkzeug (10) nach Anspruch 1, ferner umfassend mindestens einen Nockenstift (58), welcher mit der Zubehörwelle (40) gekoppelt ist, wobei der Hebel (50) ferner mindestens eine Hebelspur (67) umfasst, welche eine längliche Öffnung (64) durch dieselbe aufweist, wobei die Hebelspur mit dem mindestens einen Nockenstift gleitend eingreift;
ODER
wobei der Hebel in der Betriebsposition schwenkbar ist und in der Lagerposition nicht schwenkbar ist.

12. Oszillierendes Elektrowerkzeug (10) nach Anspruch 1, wobei der Hebel (50) in der Betriebsposition zwischen einer Zubehörklemmposition zum Befestigen des Zubehörs (38) und einer Zubehörfreigabeposition zum Freigeben des Zubehörs bewegbar ist;
der Hebel bevorzugt von der Zubehörfreigabeposition in die Zubehörklemmposition und in die Lagerposition bewegbar ist.

13. Oszillierendes Elektrowerkzeug (10) nach Anspruch 1, ferner umfassend mindestens einen Nockenstift (58), welcher mit der Zubehörwelle (40) gekoppelt ist, wobei in der Betriebsposition der Hebel mit dem mindestens einen Nockenstift eingreift, um die Zubehörwelle in die Freigabeposition zu bewegen.

14. Oszillierendes Elektrowerkzeug (10) nach Anspruch 1, ferner umfassend ein Gehäuse (11), wobei der Hebel (50) mit dem Gehäuse bewegbar gekoppelt ist, und wobei der Hebel mit dem Gehäuse in der Lagerposition bündig ist und in der Betriebsposition von dem Gehäuse vorsteht.

15. Oszillierendes Elektrowerkzeug (10) nach Anspruch 1, wobei die Bewegung des Hebels (50) in die Lagerposition den Hebel von der Zubehörwelle (40) entkoppelt.

## Revendications

1. Outil électrique oscillant (10), comprenant :
un moteur (20) ;
une bride de base (46) entraînée autour d'un axe de sortie (B) par le moteur ;
un arbre accessoire (40) pouvant être déplacé par rapport à la bride de base entre une position de serrage et une position de libération ;
une bride de serrage (42) accouplée de manière pivotante à l'arbre accessoire, la bride de serrage coopérant avec la bride de base pour serrer un accessoire (38) ; **caractérisé par** :
un actionneur (48) accouplé en service à l'arbre accessoire (40) dans une position opérationnelle pour déplacer l'arbre accessoire, dans lequel l'actionneur inclut un levier (50) pouvant être déplacé entre la position opérationnelle et une position de stockage, dans laquelle le levier n'est pas accouplé de manière opérationnelle à l'arbre accessoire.

2. Outil électrique oscillant (10) selon la revendication 1, dans lequel la bride de serrage (42) peut pivoter autour d'un axe de pivotement (C), dans lequel l'axe de pivotement coupe l'arbre accessoire (40).

3. Outil électrique oscillant (10) selon la revendication 1, comprenant en outre un pivot (44) accouplant de manière pivotante la bride de serrage (42) à l'arbre accessoire (40).

4. Outil électrique oscillant (10) selon la revendication 1, dans lequel la bride de serrage (42) peut pivoter entre une première position, dans laquelle la bride de serrage est transversale par rapport à l'arbre accessoire (40), et une deuxième position, dans laquelle la bride de serrage est en général alignée avec l'arbre accessoire, et optionnellement dans lequel la bride de serrage inclut un évidement (39) pour recevoir l'arbre accessoire dans la deuxième position.

5. Outil électrique oscillant (10) selon la revendication 1, dans lequel l'arbre accessoire (40) inclut une partie à diamètre réduit (37), et dans lequel la bride de serrage (42) est accouplée à la partie à diamètre réduit, et optionnellement dans lequel la bride de serrage inclut un évidement (39) pour recevoir la partie à diamètre réduit.

6. Outil électrique oscillant (10) selon la revendication 1, dans lequel l'arbre accessoire (40) définit un axe longitudinal (B) et peut être déplacé le long de l'axe longitudinal, et dans lequel la bride de serrage (42) peut pivoter autour d'un axe (C) coupant l'axe longitudinal.

7. Outil électrique oscillant (10) selon la revendication 1, dans lequel la bride de serrage (42) est sensiblement parallèle à la bride de base (46) dans la position de serrage.

8. Outil électrique oscillant (10) selon la revendication 1, dans lequel la bride de serrage (42) est sollicitée vers la bride de base (46).

9. Outil électrique oscillant (10) selon la revendication 1, dans lequel la bride de serrage (42) est disposée à proximité d'une extrémité distale de l'arbre accessoire (40).

10. Outil électrique oscillant (10) selon la revendication 1, dans lequel le levier (50) peut coulisser dans la position de stockage et hors de celle-ci.

11. Outil électrique oscillant (10) selon la revendication 1, comprenant en outre au moins une tige de came (58) accouplée à l'arbre accessoire (40), dans lequel le levier (50) inclut en outre au moins une piste de levier (67) comportant une ouverture allongée (64) la traversant, la piste du levier s'engageant de manière coulissante dans la au moins une tige de came ;
OU
dans lequel le levier peut pivoter dans la position opérationnelle et ne peut pas pivoter dans la position de stockage.

12. Outil électrique oscillant (10) selon la revendication 1, dans lequel le levier (50) peut être déplacé dans la position opérationnelle entre une position de serrage accessoire afin de fixer l'accessoire (38), et une position de libération accessoire afin de libérer l'accessoire ;
le levier pouvant de préférence être déplacé de la position de libération accessoire vers la position de serrage accessoire et vers la position de stockage.

13. Outil électrique oscillant (10) selon la revendication 1, comprenant en outre au moins une tige de came (58) accouplée à l'arbre accessoire (40) dans lequel, dans la position opérationnelle, le levier s'engage dans la au moins une tige de came afin de déplacer l'arbre accessoire vers la position de libération.

14. Outil électrique oscillant (10) selon la revendication 1, comprenant en outre un boîtier (11), dans lequel le levier (50) est accouplé de manière mobile au boîtier et dans lequel le levier affleure le boîtier dans la position de stockage et fait saillie du boîtier dans la position opérationnelle.

15. Outil électrique oscillant (10) selon la revendication 1, dans lequel le déplacement du levier (50) vers la position de stockage entraîne le désaccouplement du levier de l'arbre accessoire (40).
